# EUROPÄISCHE PATENTANMELDUNG

(11) **EP 1 270 335 A1**
(43) Veröffentlichungstag der Anmeldung: **02.01.2003**
(21) Anmeldenummer: 02012058.0
(22) Anmeldetag: 31.05.2002
(51) Int. Cl.: B60R 16/02

(54) **Verfahren zur Vermeidung von Überrollvorgängen an Sattel-Anhängern**

(30) Priorität: 23.06.2001 DE 10130407
(71) Anmelder: DaimlerChrysler AG, 70567 Stuttgart (DE)
(72) Erfinder: Bauer, Wolf-Dietrich, Dr., 70178 Stuttgart (DE); Mayer, Christian-Michael, P.T. DaimlerChrysler, Bogor 16965, 10002 Jakarta (ID); Schwarzhaupt, Andreas, Dr., 74420 Oberrot (DE); Spiegelberg, Gernot, Dr., 71296 Heimsheim (DE)

(57) **Zusammenfassung**

Die Erfindung betrifft ein Verfahren zur Vermeidung von Überrollvorgängen an Sattel-Anhängern mit der Ausgabe von Warnsignalen für den Fahrzeugführer bei unangemessener Fahrweise. Der Schwerpunkt (2) der Ladung (3) des Sattel-Anhängers (1) wird in einem Bordrechner rechnerisch ermittelt. Aus dem so ermittelten Schwerpunkt und der bekannten Masse des beladenen Sattelanhängers mit dem Bordrechner in Abhängigkeit von augenblicklichen Fahrparametern ein Überrollgrenzwert rechnerisch ermittelt, bei dessen Überschreiten die Warnung des Fahrzeugführers erfolgt.

## Beschreibung

Die Erfindung betrifft ein Verfahren zur Vermeidung von Überrollvorgängen an Sattel-Anhängern gemäß dem Oberbegriff des Patentanspruchs 1.

Bekannte Überrollschutzverfahren an Sattelanhängern beruhen darauf, dass während der Fahrt kontinuierlich kurzzeitige Test-Bremsungen - sogenannte "Test-Brems-Inshots" - an den Rädern beider Seiten des Sattel-Anhängers durchgeführt und während dieser Test-Bremsungen die Beschleunigungen der Räder gemessen werden. Bei abgehobenen Rädern werden mit den Test-Bremsungen
- ähnlich wie bei der bekannten ABS-Bremsregelung - zu hohe Radbeschleunigungen gemessen und daraus auf einen Überrollzustand des Sattel-Anhängers geschlossen und der Fahrzeugführer automatisch gewarnt.

Diese Verfahren haben jedoch den Nachteil, dass detektiert wird, ob Räder bereits abgehoben haben. Für die Einleitung von Überrollschutzmaßnahmen ist es dann aber vielfach schon zu spät. Ein weiterer Nachteil ist darin zu sehen, dass infolge der kontinuierlich durchzuführenden Test-Bremsungen ein hoher Verschleiß in der Bremsanlage auftritt.

Aufgabe der Erfindung ist es, ein Überrollschutzverfahren zu schaffen, dass den Beginn des Überrollens von Sattel-Anhängern vor dem Eintritt des Abhebens der Räder prädikativ erkennt und ohne Test-Bremsungen durchführbar ist.

Diese Aufgabe wird erfindungsgemäß durch die Merkmale des Patentanspruchs 1 gelöst. Weiterbildungen der Erfindung sind in den Unteransprüchen angegeben.

Das erfindungsgemäße Verfahren beruht darauf, dass für eine vorhandene Beladung die Schwerpunktlage des Sattelanhängers ermittelt und mit der gemessenen, augenblicklichen Anhänger-Querbeschleunigung - oder alternativ mit der gemessenen Fahrgeschwindigkeit und dem gemessenen Einschlagwinkel der Vorderräder - ein Grenzwert für die Anhängerquerbeschleunigung oder alternativ für die Fahrgeschwindigkeit bei vorgegebenem Einschlagwinkel berechnet wird, bis zu dem ein Eintreten des Überrollens sicher vermieden wird. Bei Überschreitung dieses Überrollgrenzwertes wird der Fahrer gewarnt und/oder es wird ein automatischer Eingriff in die Steuerung des Fahrzeuges vorgenommen.

Mit der erfindungsgemäßen Lösung wird vorteilhaft die prädikative Erkennung des Überrollens ermöglicht und ein Verschleiß der Bremsanlage verringert, da keine Test-Bremsungen ausgeführt werden müssen.

Anhand der Zeichnung wird nachstehend ein Ausführungsbeispiel der Erfindung näher erläutert.
- Fig.1: zeigt einen beladenen Sattelanhänger mit einer inhomogenen, aber festliegenden Massenverteilung der Ladung und
- Fig.2: zeigt einen beladenen Sattelanhänger mit von der augenblickichen Anhängerquerbeschleunigung abhängigem Schwerpunkt einer beweglichen Ladung.

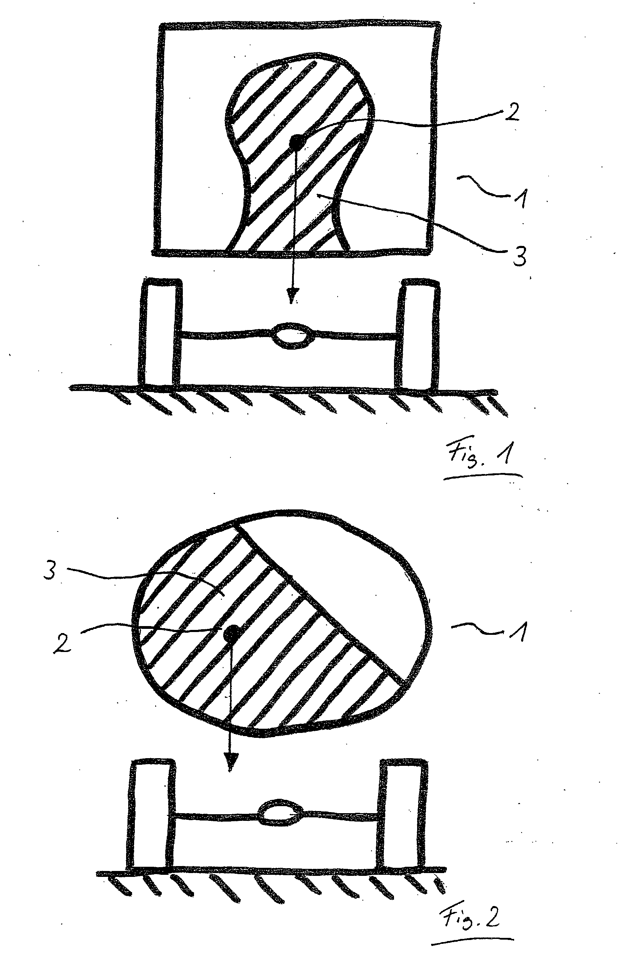

Die Lage des Schwerpunktes 2 des in Fig.1 gezeigten, beladenen Sattelanhängers 1 wird erfindungsgemäß aus der im Sattel-Anhänger geschätzten Masse der Ladung unter der Annahme einer homogenen Massenverteilung berechnet. Bei inhomogenen Massenverteilungen - wie es z.b. in Fig.1 angedeutet ist - kann alternativ eine genauere Ermittlung der Schwerpunktlage durchgeführt werden, wenn Informationen über die Massenverteilung vorliegen. Derartige Informationen sind z.b. aus elektronischen Frachtbriefen entnehmbar.

Die Schwerpunktlage des in Fig.2 gezeigten beladenen Sattel-Anhängers - bei dem es sich beispielsweise um den Sattel-Anhänger eines Tankfahrzeuges handeln - ändert sich mit der augenblicklichen Anhängerquerbeschleunigung.

Das erfindungsgemäße Verfahren zur Ermittlung des Überrollgrenzwertes muss deshalb die augenblickliche Schwerpunktslage berücksichtigen. Dazu werden bei der rechnerischen Ermittlung entweder zusätzlich die gemessene augenblickliche Anhänger-Querbeschleunigungen oder alternativ dazu die gemessene Fahrgeschwindigkeiten und der gemessene Lenkwinkel berücksichtigt.

Die rechnerische Ermittlung des Überrollgrenzwertes erfolgt beispielsweise mittels eines geeigneten Kennfeldverfahrens, in das die ermittelten Daten über den Ladungsschwerpunkt und die Anhängerquerbeschleunigung - oder der Fahrgeschwindigkeit und des Lenkwinkels - als Eingangsgrößen Berücksichtigung finden.

Der Überrollgrenzwert wird als eine maximal zulässige Anhänger-Querbeschleunigung oder als eine maximal zulässige Fahrgeschwindigkeit für einen eingeschlagenen Lenkwinkel errechnet.
Diese Fahrparameter werden mit entsprechenden Sensoren am Fahrzeug kontinuierlich erfasst und bei Überschreitung des ermittelten Überrollgrenzwertes wird der Fahrzeugführer gewarnt.

Alternativ dazu kann das erfindungsgemäße Verfahren bei Überschreitung der Grenzwerte einen automatischen Eingriff in die Kinematik des Fahrzeuges vornehmen und z.b. bei vorgegebenem Lenkwinkel die Fahrgeschwindigkeit so herabsetzen, dass der Überrollgrenzwert nicht überschritten wird.

## Patentansprüche

1. Verfahren zur Vermeidung von Überrollvorgängen an Sattel-Anhängern mit der Ausgabe von Warnsignalen für den Fahrzeugführer bei unangemessener Fahrweise, **dadurch gekennzeichnet, dass** der Schwerpunkt (2) der Ladung (3) des Sattelanhängers (1) in einem Bordrechner rechnerisch ermittelt wird und dass aus dem so ermittelten Schwerpunkt und der bekannten Masse des beladenen Sattelanhängers mit dem Bordrechner in Abhängigkeit von augenblicklichen Fahrparametern ein Überrollgrenzwert rechnerisch ermittelt wird, bei dessen Überschreiten die Warnung des Fahrzeugführers erfolgt.

2. Verfahren nach Patentanspruch 1, **dadurch gekennzeichnet, dass** die Anhängerquerbeschleunigung kontinuierlich messtechnisch ermittelt ist und im Bordrechner mit dem als maximal zulässige Anhängerquerbeschleunigung ermittelten Überrollgrenzwert verglichen ist.

3. Verfahren nach Patentanspruch 1, **dadurch gekennzeichnet, dass** der Lenkwinkel und die Fahrgeschwindigkeit kontinuierlich messtechnisch ermittelt ist und im Bordrechner mit dem für den eingestellten Lenkwinkel als maximal zulässige Fahrgeschwindigkeit ermittelten Überrollgrenzwert verglichen ist.

4. Verfahren nach einem der vorangehenden Patentansprüche 1 bis
3, **dadurch gekennzeichnet, dass** bei einer Überschreitung des Überrollgrenzwertes zusätzlich zu der Ausgabe von Warnsignalen die Fahrzeuggeschwindigkeit über entsprechend vom Bordrechner angesteuerte Stellglieder im Fahrzeug selbsttätig reduziert wird.
